# FASCICULE DE BREVET EUROPEEN

(11) **EP 4 300 236 B1**
(45) Date de publication et mention de la délivrance du brevet: **02.12.2026**
(21) Numéro de dépôt: 23181592.9
(22) Date de dépôt: 27.06.2023
(51) Int. Cl.: G05D 1/00

(54) **SYSTÈME DE PILOTAGE DE VÉHICULE AUTONOME ET MÉTHODE DE GESTION**
AUTONOMES FAHRZEUGSTEUERUNGSSYSTEM UND VERWALTUNGSVERFAHREN
AUTONOMOUS VEHICLE DRIVING SYSTEM AND MANAGEMENT METHOD

(30) Priorité: 27.06.2022 CH 7692022
(43) Date de publication de la demande: 03.01.2024
(73) Titulaire: Loxo AG, 3007 Bern (CH)
(72) Inventeur: Amini, Amin, 1726 Farvagny-le-Petit (CH); Panizza, Claudio, 6814 Lamone (CH)
(74) Mandataire: P&TS SA (AG, Ltd.)

(56) Documents cités:
- DE-A1- 102019 202 025
- US-A1- 2017 139 411
- US-A1- 2019 258 251
- US-A1- 2020 017 114
- US-A1- 2021 072 759

## Description

### Domaine technique

La présente invention concerne le pilotage des véhicules à haut degré d'autonomie, en particulier les véhicules de niveau 4 et plus. La présente invention se focalise plus particulièrement sur les moyens de sécuriser le pilotage de tels véhicules. La présente invention couvre également une méthode de gestion d'un véhicule autonome ou d'une flotte de véhicules autonomes de sorte à garantir leur conformité par rapport à une ou plusieurs normes de références.

### Etat de la technique

Le déploiement de véhicules autonomes prend une importance croissante, notamment pour desservir les derniers kilomètres d'une chaine logistique, de sorte à livrer les commandes jusqu'au domicile des clients. Garantir la sécurité de tels véhicules, notamment en milieu urbain, nécessite de nombreux dispositifs de détection et de contrôle, générant un flux de données croissant. Les différents systèmes de détection, de guidage, de surveillance sont eux-mêmes de performance et de complexité croissante et peuvent être difficiles à mettre en conformité avec les normes en vigueur. En outre, les normes évoluent et peuvent rendre rapidement obsolètes de tels matériels, entachant leur rentabilité. Le traitement des données doit néanmoins rester optimal.

L'état de la technique est connu entre autres des documents US 2020/017114 A1, US 2021/072759 A1, DE 10 2019 202025 A1, US 2019/258251 A1, US 2017/139411 A1.

### Bref résumé de l'invention

Un but de la présente invention est de proposer un système de pilotage d'un véhicule autonome ou d'une flotte de tels véhicules qui permette de garantir sa conformité à une ou plusieurs normes de référence. Un autre but de la présente invention est de garantir le maintien d'un tel système de pilotage en adéquation avec une ou plusieurs normes de référence.

Un autre objectif de la présente invention est de proposer une méthode de gestion d'un véhicule autonome, ou d'une flotte de véhicules autonomes garantissant que leur exploitation s'effectue en conformité avec une ou plusieurs normes de référence.

Selon l'invention, ces buts sont atteints notamment au moyen de l'invention objet des revendications indépendantes qui suivent, et décrits plus en détails dans les revendications qui en dépendent.

Cette solution présente notamment l'avantage par rapport à l'art antérieur de garantir des processus de sécurité d'un véhicule autonome à jours et conformes aux normes les plus récentes, ou de permettre d'implémenter une telle garanti sur des véhicules préexistants.

### Brève description des figures

Des exemples de mise en œuvre de l'invention sont indiqués dans la description illustrée par les figures suivantes :
- figure 1 : représentation schématique du système 1 selon un exemple de réalisation
- figure 2 : représentation schématiques de l'architecture des différents modules du système 1 selon un exemple de réalisation.

### Exemple(s) de mode de réalisation de l'invention

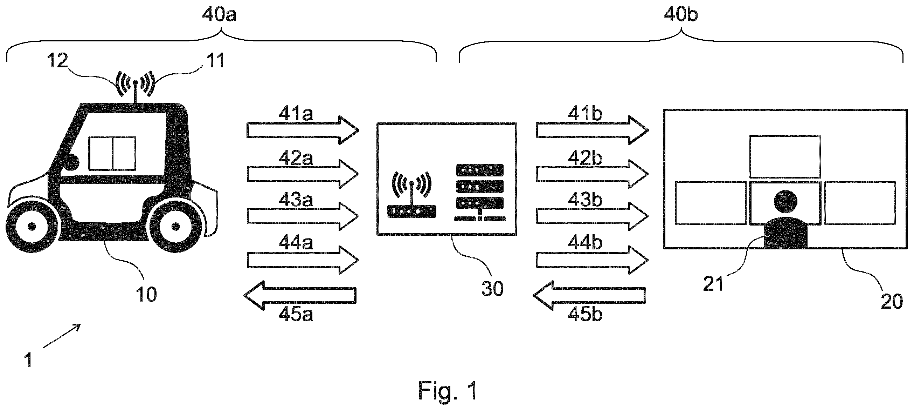

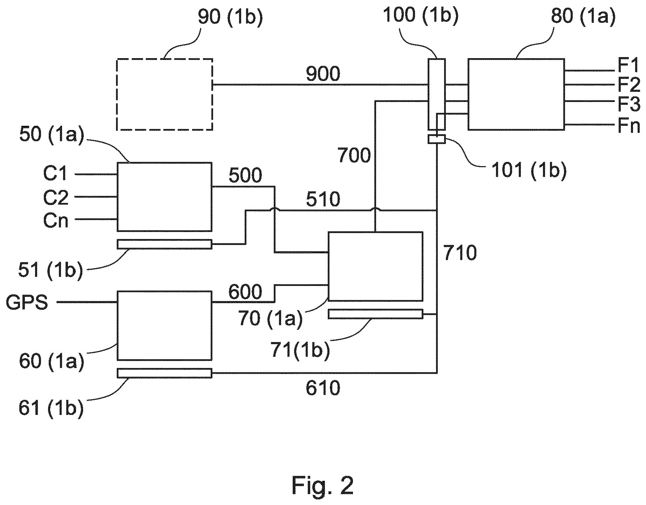

Le système **1** selon la présente description est illustré par les figures 1 et 2. Il comprend au moins un véhicule autonome **10** relié à un serveur **30** au moyen d'un ou plusieurs premiers réseaux de communication **40a.** De préférence, le système comprend plusieurs véhicules autonomes **10** organisé en flotte. Le serveur **30** est lui-même relié à un poste de commande **20** permettant à un opérateur **21** de prendre le contrôle du véhicule autonome 10 ou certaines de ses fonctions. Le poste de commande **20** et le serveur **30** sont reliés au moyen d'un ou plusieurs seconds réseaux de communication **40b.** Le poste de commande **20** est externe au véhicule autonome **10** et permet ainsi à un opérateur **21** de surveiller et/ou prendre le contrôle de plusieurs véhicules autonomes **10.** Le système **1** comportent au moins un capteur **C1, C2...Cn** permettant de percevoir l'environnement de chacun des véhicules **10.** La perception de l'environnement peut être effectuée par tout moyen adéquat, qu'il soit visuel, sonore, infrarouge, de type radar ou lidar. Ainsi les capteurs **C1, C2... Cn** peuvent être indépendamment sélectionnés parmi une caméra active dans le domaine du visible, une caméra infrarouge, un radar, un lidar, un micro, etc.. Le ou les capteurs d'environnement **C1, C2... Cn** sont de préférence embarqués dans chacun des véhicules **10.** Cela n'exclue pas que des capteurs intégrés à l'infrastructure externe au véhicule **10** puisse être également utilisés. Par exemple, les caméras de surveillance du trafic routier ou citadin peuvent être mises à profit pour mieux visualiser l'entourage d'un véhicule **10.**

Chaque véhicule autonome **10** comporte les moyens d'émission **11** adaptés à transmettre en temps réel les données relatives à son environnement, via le ou les premiers réseaux de communication **40a.** En l'occurrence, les données vidéos **41a** collectées par une ou plusieurs caméras peuvent être transmises au serveur **30.** De préférence, plusieurs capteurs sont utilisés, étant soit identiques soit différents les uns des autres de sorte à fusionner les informations collectées et produire un ensemble de données déjà traitées ou partiellement traitées. Des informations relatives à la télémétrie **42a** peuvent ainsi être soumises au serveur via le premier réseau de communication **40a.** D'autres capteurs concernant les performances **43a** du véhicules peuvent en outre collecter des informations et les transmettre via le premier réseau de communication **40a.** Par exemple, des capteurs **C1, C2... Cn** permettant de déterminer la vitesse instantanée du véhicule **10,** l'orientation de ses roues directrices, l'activation de certains dispositifs tels que le freinage, l'allumage de feux de signalisation, l'activation de l'éclairage et d'autres organes peuvent être utilisés. Si le véhicule **10** comporte un équipement spécial tel qu'un dispositif de livraison ou d'autres équipements adaptés aux fonctions du véhicule, les capteurs **C1, C2... Cn** peuvent également permettre de déterminer l'état de ces équipements. S'il s'agit d'un véhicule de livraison, alors des capteurs permettant de déterminer l'état d'ouverture ou de fermeture des compartiments de livraison, ou leur température ou tout autre paramètre utile, peuvent être installés. En outre, différents capteurs concernant l'état technique du véhicule **10,** tel qu'un degré d'usure de certains de ses éléments nécessitant un contrôle peuvent être prévus.

Les différentes données collectées par les capteurs **C1, C2... Cn** sont traitées dans un module de perception **50** comprenant les moyens adéquats de traiter ces données, notamment un ou plusieurs processeurs, une ou plusieurs mémoires ainsi que les programmes adaptés. Le module de perception **50** peut être équipé ou être connecté à un module d'intelligence artificielle. Le module de perception **50** peut être localisé au niveau du serveur **30.** Les données y sont alors transmises brutes via les premier réseaux de communication **40a** puis traitées au niveau du serveur **30.** Alternativement, un module de perception **50** peut être disposé sur chacun des véhicules **10** de sorte à traiter les données avant de les soumettre au serveur **30.** Selon un mode de réalisation, le module de perception **50** peut être scindé en plusieurs sous-modules (non représentés), dont un est intégré au serveur **30** et où les autres sous-modules équipent les véhicules autonomes **10.** Ainsi, une partie de l'information peut être traitée directement au niveau de chacun des véhicules **10** avant d'être compulsée de manière plus extensive au niveau du serveur **30.** Par exemple, le module d'intelligence artificielle peut être centralisé dans le sous-module intégré au serveur **30** et recevoir les données partiellement traitées des autres sous-modules. Toute architecture adaptée au traitement de ces données est bien entendue envisageable. Une attention particulière peut être apportée pour minimiser ou optimiser la quantité des données transmises par rapport aux débits autorisés par l'infrastructure des réseaux de communication.

Le système **1** comporte un module de localisation **60** de chaque véhicule autonome **10.** Des données de localisation peuvent être collectées par un système de type GPS ou tout autre système permettant de localiser un véhicule. D'autres systèmes tels que GNSS (Global Navigation Satellite System), IMU (Inertial Measurement Unit) stéréo-caméras, GPT (Global Positioning System Time) RTK (Real Time Kinematic) peuvent être utilisés, seuls ou en combinaison. Le module de localisation **60** peut comporter les éléments cartographiques adéquats permettant de localiser un véhicule **10** dans un environnement particulier cartographié, notamment une zone urbaine déterminée. Le module de localisation **60** peut être intégralement disposé sur chacun des véhicules **10** de sorte à transmettre au serveur **30** leur position en temps réel. Selon les besoins, le module de localisation peut comporter plusieurs sous-modules, dont un sous-module localisé au niveau du serveur **30.** Par exemple, le serveur **30** peut centraliser les fonctions liées à la cartographie alors que les coordonnées géographiques sont déterminées au niveau des véhicules correspondants. Tout arrangement jugé adéquat peut être envisagé. Ainsi, les données relatives à la position **44a** de chaque véhicule **10,** ou une partie de ces données, sont transmises en temps réel au serveur **30** via le premier réseau de communication **40a.**

Le premier réseau de communication **40a** est adapté à la transmission de données entre un véhicule mobile **10** et le serveur **30.** Il peut être basé par exemple sur le réseau hertzien et utiliser des protocoles compatibles avec la 4G ou la 5G. Alternativement ou en plus, le premier réseau de communication peut inclure une communication avec un ou plusieurs satellites. D'autres systèmes de communication équivalents peuvent être envisagés.

Le système **1** comprend un module de planification **70** du parcours de chaque véhicule **10.** Le module de planification **70** comporte les données relatives au parcours de chacun des véhicules **10** en fonction de leur mission. Ce parcours peut être préétabli et enregistré dans le module de planification **70** de sorte que chacun des véhicules **10** suive automatiquement son itinéraire. Alternativement, le parcours de chaque véhicules **10** peut être implémenté ou modifié en temps réel, notamment lors d'un changement de mission ou d'un changement d'itinéraire en cours de route. Si le véhicule autonome **10** est un véhicule de livraison à domicile, sa mission peut consister à livrer plusieurs commandes à différents endroits, s'assurer que chacune des commandes est effectivement livrée avant de poursuivre son parcours, puis revenir au dépôt pour être à nouveau chargé de commandes à livrer. Bien entendu, la mission des véhicules autonomes **10** peut être différente et adaptée à différentes activités. Il peut s'agir par exemple de missions de surveillance de lieux publiques, de missions d'entretien ou de nettoyage, de missions d'inspection d'infrastructures, etc...

Le système **1** comprend un module de pilotage **80** de chaque véhicules **10.** Le module de pilotage **80** permet de contrôler le déplacement de chaque véhicule **10** en fonction de son parcours implémenté dans le module de planification **70,** en fonction de sa position instantanée disponible dans le module de localisation **60** et en fonction de son environnement déterminé par le module de perception **50.** Les différents organes de chaque véhicules **10** parmi les organes moteurs, les organes directionnels, les organes de signalisation, ainsi que tout autre élément spécifique à leur mission, sont alors pilotés de manière automatique de sorte que chaque véhicules **10** puisse remplir sa mission. De tels organes désignent par exemple un ou plusieurs moteurs électriques, des roues directionnelles, le système de freinage, un accélérateur, un système d'alerte sonore, un système d'éclairage, un ou plusieurs voyant lumineux tels que des clignotants. D'autres organes tels qu'un système de verrouillage d'un compartiment de livraison peuvent être activés automatiquement, notamment dans le cas où le véhicule **10** est un véhicule de livraison à domicile. Pour les véhicules destinés à d'autres tâches telles que le nettoyage, la surveillance, l'inspection de bâtiments ou d'infrastructures, des organes spécifiques peuvent être activés automatiquement tel que des balais, des lances haute pression, des caméras, etc. Ainsi, le module de pilotage **80** permet d'initier différentes fonctions **F1, F2, F3...Fn** relatives à la mobilité d'un véhicule autonome **10.** Les fonctions comprennent l'activation ou la désactivation d'un frein de parc **F1,** la rotation des roues directrices d'un angle déterminé **F2,** l'application d'une vitesse de déplacement déterminée **F3** ou d'une accélération ou d'un ralentissement, l'application d'une force de freinage déterminée **F4,** l'activation de clignotants **F5** ou des feux de détresse **F6,** l'allumage des feux de route ou d'autres systèmes de lampes **F7,** l'activation d'un signal d'alerte sonore **F8** et toute autre fonction **Fn** nécessaire. Les données de commande **45a** correspondantes peuvent être transmises depuis le serveur **30** vers le véhicule **10** du système qui est concerné, via le premier réseau de communication **40a.** A cet effet, chaque véhicule autonome est pourvu d'un système de réception de données **12,** adapté à recevoir les données de commandes. Le système de réception peut bien entendu être adapté pour recevoir d'autres types de données telles que des données vocales ou vidéo. Le système d'émission **11** et le système de réception **12** peuvent former un système unique d'émission/réception propre à la transmission des données montantes et descendantes entre chaque véhicule autonome **10** du système **1** et le serveur **30.**

Selon la disposition illustrée par la figure 2, le module de perception **50** et le module de localisation **60** sont respectivement connectés au module de planification **70** via des connections **500** et **600.** Le module de planification **70** est quant à lui connecté au module de pilotage **80** via une connexion **700.** Cela n'interdit pas que l'un ou l'autre des modules de perception **50** et de localisation **60** soit directement connectés au module de pilotage **80.** Cela n'interdit pas non plus que certaines données soient transmises depuis l'un ou l'autre des modules de perception **50** et de localisation **60** vers le modules de planification **70** et d'autres données soient transmises directement depuis ces modules vers le module de pilotage **80.**

Bien que les différents modules de perception **50,** de localisation **60,** de planification **70** et de pilotage **80** soient représentés par des blocs distincts, ils ne sont pas nécessairement physiquement séparés les uns des autres. Lorsque c'est techniquement possible, plusieurs modules peuvent être regroupés dans un même dispositif. Plusieurs modules peuvent même partager les mêmes ressources telles que des cartes mémoires ou des processeurs.

L'ensemble des modules de perception **50,** de localisation **60,** de planification **70** et de pilotage **80,** incluant les capteurs **C1, C2..Cn,** le système de type GPS, GNSS et associés, le premier réseau de communication **40a** et le serveur **30,** forme un sous-ensemble autonome **1a,** permettant à chaque véhicule autonome **10** du système **1** de se déplacer automatiquement pour accomplir sa mission. Ces éléments forment un système entièrement automatisé. Le sous-ensemble autonome **1a** peut comporter d'autres éléments utiles au déplacement de véhicules autonomes.

Le terme « véhicules autonome» selon la présente description désigne tout véhicule terrestre de haute autonomie, c'est-à-dire d'une autonomie d'un niveau 4 ou plus élevée. L'autonomie de niveau 4 est définie comme permettant au véhicule autonome de se déplacer sans intervention humaine dans des conditions de circulation standard. Une intervention humaine reste possible dans des conditions plus défavorables. Les véhicules de niveau 5 sont quant à eux dépourvus de commandes manuelles telles que pédales et volant et sont entièrement autonomes.

Bien que le sous-ensemble autonome **1a** permette le déplacement de chaque véhicule autonome **10** pour accomplir sa mission, il ne permet pas en soi de palier à des imprévus non reconnus par ce sous-ensemble autonome **1a.** Par exemple, des variations d'interprétation de l'environnement d'un capteur à l'autre **C1, C2...Cn** peuvent conduire à une incertitude dans une décision à prendre. Même si le module d'intelligence artificielle permet de pondérer les différents paramètres recueillis par les capteurs **C1, C2...Cn** , ou de déterminer statistiquement un niveau de risque, il peut arriver qu'une décision ne puisse être prise automatiquement. Par mesure de sécurité, en cas de doute, le véhicule concerné s'arrête. Un arrangement ne comprenant que le sous-ensemble autonome **1a** pourrait conduire à de nombreux retards de livraison et des coûts d'intervention élevés.

De sorte à pallier à ces inconvénients, le système **1** comporte en plus du sous ensemble autonome **1a** un sous-ensemble de contrôle **1b.** Le sous-ensemble de contrôle **1b** comprend le centre de contrôle **20,** mentionné plus haut, connecté au serveur **30** par un second réseau de communication **40b.** Le second réseau de communication **40b** est de préférence câblé. Il peut comprendre par exemple tout type de câbles permettant de transmettre de l'information, tels que des câbles Ethernet ou des fibres optiques. Le centre de contrôle **20** recueille les données vidéo **41b,** les données de télémétrie **42b,** les données de performance **43b,** ou une partie de ces données transmises en temps réel par le serveur **30.** D'autres données utiles **44b** telles que celles mentionnées plus haut peuvent également être transmises au serveur **30.** Ces données peuvent être retransmises telles que reçues par le serveur **30** via le premier réseau de communication **40a** et correspondent ainsi aux donnes **41a, 42a, 43a** et **44a** correspondantes. Alternativement, ces données peuvent avoir été partiellement traitées par le serveur 30 de sorte par exemple à en simplifier la lisibilité ou la fluidité ou pour toute autre raison.

Le centre de contrôle **20** comporte un dispositif de visionnage tel qu'un ou plusieurs écrans permettant de visualiser au moins les données vidéo **41b** collectées par les caméras d'un véhicule autonome **10.** Un opérateur **21** peut donc surveiller en temps réel l'environnement visible de chaque véhicule **10.** Le centre de contrôle peut en outre comporter un dispositif de visualisation des données télémétriques **42b** ou toute autre donnée transmise via le serveur **30.** Un dispositif de visualisation peut être un écran, des lunettes de réalité virtuelle ou augmentée, ou tout équivalent. Le centre de contrôle **20** comporte en outre un ou plusieurs dispositifs de commande adaptés à initier manuellement une ou plusieurs des fonctions **F1, F2, F3...Fn** mentionnées plus haut. Il peut comporter par exemple un volant ou des manettes permettant d'orienter les roues directrices d'un véhicule donné d'un angle contrôlé **F1.** Il peut comprendre une pédale ou une manette permettant l'application d'une force de freinage à un véhicule donné **F4.** Il peut comprendre une autre pédale ou une manette permettant une accélération ou l'application d'une vitesse de déplacement à un véhicule donné **F3.** Le centre de contrôle **20** peut comprendre un ou plusieurs dispositifs de commande de clignotant **F5** ou des feux de détresses **F6,** ou des lumières **F7** ou d'un signal d'alerte **F8** d'un véhicule donné. Le centre de contrôle **20** peut par exemple regrouper toutes les commandes usuelles d'un poste de pilotage d'un véhicule traditionnel. Les données de commande **45b** peuvent être transmises au serveur **30** via le second réseau de communication **40b,** puis du serveur **30** au véhicule concerné via le premier réseau de communication **40a.**

Les différentes commandes du centre de contrôle **20** sont activées par un opérateur humain **21,** de préférence habilité à intervenir sur un tel système **1.** Il peut être requis qu'un opérateur **21** soit au minimum titulaire d'un permis de conduire. Des qualifications supplémentaires peuvent être requises en fonction des besoins. Outre les organes de commandes mentionnés ci-dessus, l'opérateur **21** peut être équipé de microphones et/ou d'écouteurs permettant de s'adresser à un véhicule autonome **10** du système **1** ou aux personnes qui l'entourent. A cette fin, chaque véhicule autonome **10** peut être pourvu d'un dispositif de communication vocale permettant aux personnes entourant le véhicule d'appeler et/ou de communiquer avec l'opérateur **21.** Des équipements tels que casque, lunettes de réalité augmentée peuvent être mis à disposition de l'opérateur.

A la place des écrans de visualisation mentionnés plus haut ou en plus, un système de réalité virtuelle peut être utilisé, ou un système de réalité augmentée, ou tout autre système de visualisation adapté.

Le sous-ensemble de contrôle **1b** comporte en outre un module de télé-opération **90** permettant à un opérateur humain **21** de piloter un véhicule autonome **10** ou certaines de ses fonctions depuis le centre de contrôle **20.** Le module de télé-opération **90** peut être dans un mode activé, auquel cas il permet à un opérateur humain **21** de contrôler un véhicule autonome **10** depuis le centre de contrôle ou une partie de ses fonctions. Le module de télé-opération **90** peut alternativement être en mode désactivé, auquel cas il n'interagit avec aucun des autres modules du système **1.**

L'activation et la désactivation du module de télé-opération **90** peut s'effectuer manuellement, par exemple sur instruction de l'opérateur **21** depuis le centre de contrôle **20.** Une fois activé, le module de télé-opération **90** interagit avec le module de pilotage **80** de sorte à transmettre à un véhicule autonome **10** les commandes activées par l'opérateur **21.** Dans ce cas, les commandes correspondantes normalement initiées automatiquement via le module de pilotage **80** sont désactivées au profit des commandes manuelles transmises par l'opérateur **21.** Les modules de perception **50,** de localisation **60** et de planification **70** peuvent rester actifs et continuer à transmettre les données correspondantes **41a, 42a, 43a.** Une partie des fonctions **F1, F2, F3...Fn** peuvent rester activables automatiquement lorsque le module de télé-opération **90** est actif. Par exemple, l'activation des feux clignotants **F5** peut être automatique lorsque l'opérateur **21** commande la fonction **F2** de rotation des roues directrices. Selon un autre exemple, la fonction d'application d'une force de freinage déterminée **F4** peut prendre la précédence sur les manœuvres manuelles dans le cas où un obstacle imminent est identifié par le module de perception **50,** ou identifié au-delà d'un seuil de certitude. Une confirmation peut être requise de la part de l'opérateur avant de desserrer les freins du véhicule autonome **10** et poursuivre un contrôle manuel. Selon un autre exemple, des fonctions peuvent être automatiquement activées lorsque le module de télé-opération **90** est activé. Par exemple, l'activation des feux de détresse **F6** peut être effectuée pour prévenir l'entourage du véhicule concerné que sa manœuvre est au moins en partie contrôlée manuellement. L'activation automatique d'un signal d'alerte sonore **F8** peut également être considérée. Le véhicule autonome **10** concerné peut ainsi être dans un mode dual, impliquant pour une partie des fonctions une commande manuelle via le module de télé-opération **90** et pour une partie des fonctions une commande automatique via le module de pilotage **80.** Le pilotage manuel du véhicule autonome concerné **10** est alors assorti d'une assistance automatique produite par le sous-ensemble autonome **1a.** Selon un mode de réalisation, l'opérateur **21** peut décider de désactiver une ou plusieurs fonctions normalement initiées automatiquement. Selon un autre mode de réalisation, l'opérateur **21** peut désactiver le caractère automatique de l'ensemble des fonctions et établir un contrôle exclusivement manuel du véhicule autonome **10** considéré. Le système **1** peut ainsi permettre de distinguer entre l'activation du module de télé-opération **90** et la désactivation d'une ou plusieurs fonctions normalement initiées automatiquement via le module de pilotage **80.**

Le module de télé-opération **90** peut être relié au module de pilotage 80 par une ou plusieurs lignes de connexion **900.**

Le sous-ensemble de contrôle **1b** comprend selon l'invention un module de bascule **100,** faisant office de switch entre le mode totalement autonome dans lequel le module de télé-opération **90** est inactif et le mode dual dans lequel le module de télé-opération **90** est activé. Le module de bascule permet ainsi d'établir l'interaction entre le module de télé-opération **90** et le module de pilotage **80** ou bien d'isoler les deux modules l'un de l'autre.

Le sous-ensemble de contrôle **1b** comprend en outre au moins une couche de sécurité **51, 61, 71, 101** intégrée ou connectée à au moins un des modules de perception **50,** de localisation **60** et de planification **71.** La ou les couches de sécurité consistent en un programme de contrôle d'au moins une partie des processus opérés dans le module **50, 60, 70** correspondant. La ou les couches de sécurité comprennent à cet effet tous les moyens de calcul et de traitement de données tels que des processeurs et des mémoires, ainsi que les algorithmes nécessaires à la surveillance et au contrôle des modules correspondants **50, 60, 70.** De préférence, aucune des couches de sécurité n'implique de programme d'intelligence artificielle, de sorte à n'opérer que des tâches simples, rapides et clairement identifiées. La couche de contrôle **51** s'assure en l'occurrence que les données reçues par les capteurs **C1, C2, C3...Cn** sont traitées par le module de perception **50** selon les protocoles acceptés par les normes en vigueur. Par exemple, la couche de contrôle **51** peut être programmée pour vérifier que le traitement des données correspond aux exigences d'une ou plusieurs normes telle que la norme ISO21448 et/ou ISO26262 ou d'autres normes régissant les véhicules autonomes. Les processus surveillés ne sont pas limités. Ils peuvent par exemple correspondre à la manière de pondérer différents paramètres, notamment dans le cas où les données recueillies par les capteurs **C1, C2, C3...Cn** sont fusionnées. Ils peuvent alternativement correspondre à la manière d'évaluer un risque sur la base des données collectées par les capteurs. Ils peuvent alternativement ou en plus correspondre à la manière de sélectionner une action, ou sur le choix des actions, sur la base des données collectées par les capteurs et compulsées par le module de perception **50.**

La couche de sécurité **61** peut être programmée de sorte à contrôler que les processus opérés dans le module de localisation **60** correspondent effectivement à ceux reconnus ou acceptés par les normes en vigueur. La ou les normes sélectionnées pour la programmation de la couche de sécurité **61** peuvent être les mêmes que celles sous-jacentes à la couche de sécurité **51** ou différentes. Elles sont de préférence sélectionnées parmi les normes ISO21448 et/ou ISO26262.

La couche de sécurité **71** s'assure que les processus opérés par le module de planification **70** correspond aux exigences en vigueur. Les normes sous-jacents peuvent être identiques ou différentes de celles des autres couches de sécurité. Elles sont de préférence sélectionnées parmi les normes ISO21448 et/ou ISO26262.

Les différentes couches de sécurité **51, 61, 71** peuvent en outre contrôler d'autres aspects tels que la qualité des réseaux de communication notamment la puissance de leurs signaux s'il s'agit de réseaux hertziens ou satellitaires, ou bien la manière de déterminer cette qualité. Par exemple, une ou plusieurs des différentes couches de sécurité 51, 61, 71 peuvent effectuer une surveillance en temps réel de la qualité des réseaux de communication et adapter les paquets d'information en conséquence. Cet aspect peut être particulièrement pertinent pout les données vidéos. L'adaptation des paquets d'information peut suivre une norme préétablie, telle que la norme ISO 26262, relative aux mécanismes de sécurité des réseaux.

Selon l'invention, le sous ensemble de contrôle **1b** comprend trois couches de sécurité indépendantes **51, 61, 71** dédiées au trois modules correspondants de perception **50,** de localisation **60** et de planification **70.**

En fonctionnement, la ou les couches de sécurité **51, 61, 71,** surveillent en permanence les processus en cours d'opération dans les modules correspondants. Lorsqu'une couche de sécurité **51, 61, 71** détecte une faille dans un ou plusieurs processus du module correspondant, elle peut par exemple transmettre un signal au centre de contrôle **20** à l'attention d'un opérateur **21,** ou émettre une notification qui sera enregistrée pour une consultation ultérieure et une correction du processus impliqué. Une faille est en particulier un processus non conforme aux normes considérées. Cet aspect s'applique aisément aux failles mineures, en particulier celles n'induisant aucun risque pour les utilisateurs ou l'environnement du véhicule autonome, mais peut ne pas suffire en cas de risques plus élevés, qui nécessitent par exemple d'agir sur la course du véhicule autonome **10.**

La ou les couches de sécurité **51, 61, 71,** peuvent en outre traiter elles-mêmes les données ou une partie des données des modules correspondants selon les normes en vigueurs et initier sur cette base des actions et/ou générer d'autres données différentes des actions initiées ou des données générées par les modules correspondants, non conformes aux normes considérées. De la sorte la ou les couches de sécurité **51, 61, 71** pallient d'elles-mêmes aux éventuelles lacunes des modules correspondants. Par exemple, les processus du module de perception **50** peuvent ne pas être totalement à jour sur la manière de traiter une incohérence dans les données collectées par les capteurs **C1, C2...Cn** et conduire à l'initiation d'une action ou à la génération de données non conformes. Dans ce cas, la couche de sécurité **51** initie d'elle-même de manière prioritaire l'action conforme ou génère de manière prioritaire les données conformes aux normes les plus récentes. Ainsi, les couches de sécurité **51, 61, 71** garantissent que le véhicule autonome **10** est piloté selon les normes de sécurité les plus récentes.

Les réponses de la ou des couches de sécurité **51, 61, 71** peuvent être limitées aux décisions les plus cruciales pour la sécurité des utilisateurs du véhicule ou de son entourage. Par exemple, des actions telles que l'arrêt du véhicule autonome **10** et/ou l'émission d'une alerte sonore, peuvent être prises ou initiées par une couche de sécurité, bien que le module correspondant n'aurait pas pris ou initié une telle décision selon ses processus opérationnels propres.

Selon l'invention, une ou plusieurs des couches de sécurité **51, 61, 71** sont connectées à une couche d'activation **101** du module de bascule **100,** permettant d'activer automatiquement le module de télé-opération **90.** Alternativement ou en plus, une requête est émise au centre de contrôle **20** pour qu'un opérateur humain **21** prenne le contrôle du véhicule autonome **10** concerné. Les couches de sécurité **51, 61** et **71** peuvent être reliées à la couche d'activation **101** respectivement par les lignes de connexion **510, 610** et **710**. Le module de télé-opération **90** devient alors actif et apte à opérer conformément à la description présentée plus haut.

Lorsque le module de télé-opération **90** est activé, soit manuellement par un opérateur **21** de son propre chef ou après requête du système **1,** soit automatiquement, la ou les couches de sécurité **51, 61, 71** contrôlent les instructions d'entrées produites par l'opérateur **21** de sorte qu'elles restent compatibles avec les normes en vigueur. Si par exemple l'opérateur **21** remet en route le véhicule autonome **10** après qu'il s'est arrêté automatiquement, alors que subsiste un obstacle identifié comme tel selon les normes en vigueur, une ou plusieurs couches de sécurité **51, 61, 71** peuvent interdire la manœuvre manuelle de l'opérateur **21.** Une alerte peut en outre lui être transmise.

Les couches de sécurité **51, 61, 71,** permettent ainsi de maintenir aisément à jour les processus utilisés dans le pilotage des véhicules autonomes **10** selon les normes de sécurité les plus récentes. Ils garantissent en outre que les processus opérés par un module d'intelligence artificielle restent conforment aux normes de sécurité en vigueur.

La sécurité mentionnée plus haute concerne essentiellement l'intégrité physique des utilisateurs des véhicules autonomes **10** et les biens et les personnes de leur environnement. Il s'agit en particulier d'éviter toute collision, autant avec des infrastructures que des piétons. Une ou plusieurs des couches de sécurité **51, 61, 71** peuvent être en outre programmées pour garantir un certain niveau de sécurité contre des opérations de cybercriminalité, telle qu'une prise de contrôle illicite d'un véhicule autonome **10** ou du sabotage de ses fonctions. A cette fin, les couches de sécurité **51, 61, 71** peuvent être programmées de sorte à contrôler que les processus opérés dans les modules correspondants ne contreviennent pas aux normes régissant la cybercriminalité ou la cybersécurité. Une ou plusieurs des couches de sécurité **51, 61, 71** peuvent être programmées par exemple pour satisfaire aux standards de la norme ISO 21434, relative à la cybersécurité.

Les différents éléments du sous-ensemble de contrôle **1b,** notamment les couches de sécurité **51, 61, 71,** le module de télé-opération **90** et le module de bascule **100,** peuvent être implémentés lors de l'élaboration du véhicule autonome **10** et/ou du système **1.** Alternativement, ils peuvent être implémentés sur des systèmes préexistants pourvu d'au moins un des éléments du sous-ensemble autonome **1a.** De la sorte, des systèmes déjà en service peuvent être améliorés par l'ajout de couches de sécurité sur les modules adéquats.

La présente description couvre également une méthode de gestion d'au moins un véhicule autonome **10,** soit d'une flotte de véhicules autonomes **10** au moyen du système décrit ci-dessus. Le moyen de gestion permet en particulier de garantir que les véhicules autonomes restent pilotés selon les normes de sécurité les plus adéquates. La méthode comprend notamment une étape de piloter de manière autonome un ou plusieurs véhicules autonomes **10.** Le pilotage autonome des véhicule est effectué au moyen du système **1** et en particulier du sous-ensemble autonome **1a.** Les différentes opérations sont celles décrites ci-dessus.

La méthode de gestion comprend une étape de surveillance des processus ou d'une partie des processus opérés au sein du sous-ensemble autonome **1a** par une ou plusieurs couches de sécurité **51, 61, 71.** Les couches de sécurité agissent comme indiqué précédemment, et contrôlent notamment l'adéquation des processus à une ou plusieurs normes de références, telles que celles mentionnées plus haut.

La méthode comporte une étape de basculer le système **1** dans un mode dual ou manuel lors de la détection d'un processus défaillant ou non conforme. Le basculement s'effectue comme indiqué ci-dessus, en particulier au moyen du module de basculement **100.** La méthode comprend alors une étape de prise de contrôle du véhicule autonome concerné par un opérateur humain **21** depuis un centre de contrôle **20** au moyen du module de télé-opération **90.** La manœuvre est de préférence effectuée en mode dual de sorte à maintenir une assistance de l'opérateur par le sous-ensemble autonome **1a.**

La méthode comprend l'étape de contrôler que les opérations initiées par l'opérateur **21** via le module de télé-opération **90** sont conformes au normes de sécurité les plus adéquates. Le contrôle des opération s'effectue via l'une ou plusieurs des couches de sécurité mentionnées plus haut.

La méthode peut en outre comprendre une étape de contrôle des processus opérés automatiquement dans un ou plusieurs des modules de perception **50,** localisation **61,** planification **71** ou effectués par un opérateur **21** via le module de télé-opération **90** vis-à-vis de normes de cybersécurité.

### Numéros de référence employés sur les figures

- 1: Système
- 1a: Sous ensemble autonome
- 1b: Sous ensemble de contrôle
- 10: Véhicule autonome
- 11: Système d'émission
- 12: Système de réception
- 20: Centre de contrôle
- 21: Operateur
- 30: Serveur
- 40a: Premier réseau de communication
- 40b: Second réseau de communication
- 41a, 41b: Données vidéo
- 42a, 42b: Données de télémétrie
- 43a, 43b: Données de performance
- 50: Module de perception
- 60: Module de localisation
- 70: Module de planification
- 80: Module de pilotage
- 90: Module de télé-opération
- 100: Module de bascule
- 101: Couche d'activation
- 51, 61, 71: Couches de sécurité
- 500, 600, 700, 510, 610, 710: Connexions

## Revendications

1. Système (1) adapté au pilotage d'au moins un véhicule autonome (10) de niveau d'autonomie 4 et supérieure, comprenant un ou plusieurs véhicules autonomes (10) équipé d'un système d'émission (11) et de réception (12) de données, le système comprenant un sous-ensemble autonome (1a) permettant de piloter chaque véhicule de manière autonome, et un sous ensemble de contrôle (1b) permettant de sécuriser chaque véhicule autonome (10),
- le sous-ensemble autonome comprenant un module de perception (50) relié à ou comprenant un ou plusieurs capteurs (C1, C2...Cn), un module de localisation (60), un module de planification (70), un module de pilotage (80) et un serveur (30), ledit au moins un véhicule autonome étant connecté au serveur (30) par un premier réseau de communication (40a),
- le sous ensemble de contrôle (1b) comprenant un centre de contrôle (20) connecté au serveur par un second réseau de communication (40b), et un module de télé-opération (90) permettant à un opérateur humain (21) de prendre à distance le contrôle au moins partiel d'un véhicule (10), le système (1) comprenant en outre:
- un module de bascule (100) permettant d'activer ou de désactiver le module de télé-opération (90), ledit module de bascule (100) pouvant être activé automatiquement ou manuellement par l'opérateur humain de sorte à établir une interaction entre le module de télé-opération (90) et le module de pilotage (80) ou de sorte à isoler lesdits modules de télé-opération (90) et de pilotage, **caractérisé en ce que** le système (1) comprend en outre: - une couche d'activation (101) du module de bascule (100), et
- plusieurs couches de sécurité (51, 61, 71) indépendantes intégrées ou connectées à chacun des modules de perception (50), de localisation (60) et de planification (70), consistant en des programmes de contrôle d'au moins une partie des processus opérés dans les modules correspondants et/ou de la qualité des premier et second réseaux de communication, une ou plusieurs des couches de sécurité étant connectées à ladite couche d'activation (101) du module de bascule (100) et configurées pour faire basculer le système dans un mode dual ou manuel si des processus défaillants ou non conformes sont détectés dans les modules de perception (50), de localisation (60) ou de planification (70), lesdites couches de sécurité (51, 61, 71) étant en outre adaptées à contrôler les opérations initiées par ledit opérateur humain (21).

2. Système selon la revendication 1, le centre de contrôle comprenant au moins un dispositif de visionnage de données vidéos (41a, 41b), un dispositif de visualisation de données télémétriques (42a, 42b), un ou plusieurs dispositifs de commandes adapté pour activer une ou plusieurs fonction d'un véhicules autonome (10) telles que l'orientation des roues directrices (F1), l'application d'une vitesse de déplacement (F2), l'application d'une force de freinage (F3) , l'activation de feux clignotants (F5) ou de feux de détresse (F6) ou de lumières (F7) ou d'un signal d'alerte sonore (F8).

3. Système selon l'une des revendications 1 et 2, dans lequel ledit module de bascule (100) permet audit opérateur humain de contrôler lesdits un ou plusieurs véhicules en mode dual de sorte à maintenir une assistance de l'opérateur humain par le sous-ensemble autonome (1a).

4. Système selon l'une des revendications 1 à 3, dans lequel l'un ou plusieurs des modules de perception (50), de localisation (60) et de planification (70) comporte un module d'intelligence artificielle, et où aucune des couches de sécurités (51, 61, 71) correspondante ne comporte de module d'intelligence artificielle.

5. Système selon l'une des revendications 1 à 4, dans lequel les couches de sécurité (51, 61, 71) sont programmées de sorte à garantir un niveau de cybersécurité conforme à une norme en vigueur.

6. Système selon l'une des revendications 1 à 5, dans lequel les couches de sécurité (51, 71, 71), le module de télé-opération (90) et le module de bascule (100) sont implémentés lors de l'élaboration desdits au moins un véhicule autonome (10), ou sur des système préexistants pourvus d'au-moins un module de perception (50), module de localisation (60), module de planification (70), module de pilotage (80) et serveur (30).

7. Méthode de gestion d'au moins un véhicule autonome (10) au moyen du système (1) tel que défini dans l'une des revendications 1 à 6, la méthode comprenant :
- une étape de piloter de manière autonome chaque véhicule (10), au moyen d'un sous-ensemble autonome (1a) du système (1),
- une étape de surveillance d'au moins une partie des processus impliqués dans le pilotage automatique de chaque véhicule (10) , et
- une étape d'activer le module de télé-opération (90) lorsqu'un processus non conforme ou défaillant est détecté.
**caractérisé en ce que** l'étape de surveillance d'au moins une partie des processus impliqués dans le pilotage automatique de chaque véhicule (10) est effectuée au moyen de plusieurs couches de sécurité (51, 61, 71) associées aux modules de perception (50), de localisation (60) et de planification (70) au sein desquels sont effectués les processus et **en ce que** la méthode comprend en outre une étape de contrôler les instructions émises par un opérateur (21) lorsque le module de télé-opération (90) est activé, au moyen desdites couches de sécurité (51, 61, 71).

8. Méthode selon la revendication 7, comprenant en outre l'étape de contrôler la conformité des processus opérés dans un ou plusieurs desdits modules de perception (50), de localisation (60) et de planification (70), soit de manière automatique soit via les instructions d'un opérateur (21), au moyen desdites couches de sécurité (51, 61, 71).

## Patentansprüche

1. Ein System (1), das zur Steuerung mindestens eines autonomen Fahrzeugs (10) der Autonomiestufe 4 oder höher geeignet ist, umfassend ein oder mehrere autonome Fahrzeuge (10), die mit einem System zum Senden (11) und Empfangen (12) von Daten ausgestattet ist/sind, wobei das System eine autonome Untereinheit (1a) umfasst, die es ermöglicht, jedes Fahrzeug autonom zu steuern, sowie eine Kontrolluntereinheit (1b), die es ermöglicht, jedes autonome Fahrzeug (10) zu sichern,
- wobei die autonome Untereinheit ein Wahrnehmungsmodul (50) umfasst, das mit einem oder mehreren Sensoren (C1, C2...Cn) verbunden ist oder einen oder mehrere Sensoren (C1, C2...Cn) umfasst, ein Ortungsmodul (60), ein Planungsmodul (70), ein Steuermodul (80) und einen Server (30), wobei das mindestens eine autonome Fahrzeug über ein erstes Kommunikationsnetz (40a) mit dem Server (30) verbunden ist,
- wobei die Kontrolluntereinheit (1b) eine Leitstelle (20) umfasst, die über ein zweites Kommunikationsnetz (40b) mit dem Server verbunden ist, sowie ein Fernbedienungsmodul (90), das es einem menschlichen Bediener (21) ermöglicht, zumindest teilweise die Fernbedienung eines Fahrzeugs (10) zu übernehmen,
wobei das System (1) des Weiteren Folgendes umfasst:
- ein Umschaltmodul (100), das es ermöglicht, das Fernbedienungsmodul (90) zu aktivieren oder zu deaktivieren, wobei das Umschaltmodul (100) automatisch oder manuell durch den menschlichen Bediener aktiviert werden kann, um eine Interaktion zwischen dem Fernbedienungsmodul (90) und dem Steuermodul (80) herzustellen oder um das Fernbedienungsmodul (90) und das Steuermodul voneinander zu trennen,
**dadurch gekennzeichnet, dass** das System (1) des Weiteren Folgendes umfasst:
- eine Aktivierungsebene (101) des Umschaltmoduls (100), sowie
- mehrere unabhängige Sicherheitsebenen (51, 61, 71), die in jedes der Wahrnehmungs- (50), Ortungs- (60) und Planungsmodule (70) integriert oder mit diesen verbunden sind und die aus Steuerprogrammen zur Kontrolle von zumindest einem Teil der in den entsprechenden Modulen ablaufenden Prozesse und/oder der Qualität des ersten und zweiten Kommunikationsnetzwerks bestehen, wobei eine oder mehrere der Sicherheitsebenen mit der einen oder den mehreren Aktivierungsebene (101) des Umschaltmoduls (100) verbunden und so konfiguriert sind, dass sie das System in einen Dual- oder manuellen Modus umschalten, wenn fehlerhafte oder nicht konforme Prozesse in den Wahrnehmungs- (50), Ortungs- (60) oder Planungsmodulen (70) fehlerhafte oder nicht konforme Prozesse festgestellt werden, wobei die besagten Sicherheitsebenen (51, 61, 71) weiters dazu ausgerichtet sind, die von dem besagten menschlichen Bediener (21) initiierten Vorgänge zu überwachen.

2. System nach Anspruch 1, wobei die Leitstelle mindestens eine Vorrichtung zur Anzeige von Videodaten (41a, 41b), eine Anzeigevorrichtung für Telemetriedaten (42a, 42b), eine oder mehrere Steuervorrichtungen, die dazu ausgelegt sind, eine oder mehrere Funktionen eines autonomen Fahrzeugs (10) zu aktivieren, wie beispielsweise die Ausrichtung der Lenkräder (F1), die Einstellung einer Fahrgeschwindigkeit (F2), die Ausübung einer Bremskraft (F3), die Aktivierung von Blinkern (F5) oder Warnblinklicht (F6) oder Beleuchtung (F7) oder eines akustischen Warnsignals (F8).

3. System nach einem der Ansprüche 1 und 2, wobei das Umschaltmodul (100) es dem menschlichen Bediener ermöglicht, das eine oder die mehreren Fahrzeuge im Dualmodus zu steuern, um eine Unterstützung des menschlichen Bedieners durch die autonome Untereinheit (1a) aufrechtzuerhalten.

4. System nach einem der Ansprüche 1 bis 3, wobei eines oder mehrere der Wahrnehmungs- (50), Ortungs- (60) und Planungsmodule (70) ein Modul für künstliche Intelligenz umfassen und wobei keine der entsprechenden Sicherheitsebenen(51, 61, 71) ein Modul für künstliche Intelligenz umfasst.

5. System nach einem der Ansprüche 1 bis 4, wobei die Sicherheitsebenen (51, 61, 71) so programmiert sind, dass ein Cybersicherheitsniveau gewährleistet ist, das einer geltenden Norm entspricht.

6. System nach einem der Ansprüche 1 bis 5, wobei die Sicherheitsebenen (51, 71, 71), das Fernbedienungsmodul (90) und das Umschaltmodul (100) bei der Entwicklung des mindestens einen autonomen Fahrzeugs (10) oder in bereits bestehenden Systemen implementiert sind, die mit mindestens einem Wahrnehmungsmodul (50), einem Ortungsmodul (60), Planungsmodul (70), Steuermodul (80) und Server (30) ausgestattet sind.

7. Ein Verfahren zur Steuerung mindestens eines autonomen Fahrzeugs (10) mittels des Systems (1) nach einem der Ansprüche 1 bis 6, wobei das Verfahren Folgendes umfasst:
- einen Schritt zum autonomen Steuern jedes Fahrzeugs (10) mittels einer autonomen Untereinheit (1a) des Systems (1),
- einen Schritt zum Überwachen mindestens eines Teils der Prozesse, die an der automatischen Steuerung jedes Fahrzeugs (10) beteiligt sind, und
- einen Schritt zum Aktivieren des Fernbedienungsmoduls (90), wenn ein nicht konformer oder fehlerhafter Prozess erkannt wird,
**dadurch gekennzeichnet, dass** der Schritt der Überwachung mindestens eines Teils der Prozesse, die an der automatischen Steuerung jedes Fahrzeugs (10) beteiligt sind, mittels mehrerer Sicherheitsebenen (51, 61, 71) erfolgt, die den Wahrnehmungsmodulen (50), den Ortungsmodulen (60) und den Planungsmodulen (70), in denen die Prozesse ausgeführt werden, zugeordnet sind, und dass das Verfahren weiters einen Schritt umfasst, bei dem die von einem Bediener (21) erteilten Befehle überprüft werden, wenn das Fernbedienungsmodul (90) aktiviert ist, und zwar mittels der besagten Sicherheitsebenen (51, 61, 71).

8. Verfahren nach Anspruch 7, das weiters den Schritt der Überprüfung der Konformität der in einem oder mehreren der besagten Wahrnehmungs- (50), Ortungs-(60) und Planungsmodule (70) durchgeführten Prozesse umfasst, sei es automatisch oder über die Anweisungen eines Bedieners (21), unter Verwendung der besagten Sicherheitsebenen (51, 61, 71).

## Claims

1. A system (1) adapted to control at least one autonomous vehicle (10) with an autonomy level of 4 or higher, comprising one or more autonomous vehicles (10) equipped with a data transmission (11) and reception (12) system, the system comprising an autonomous subsystem (1a) for controlling each vehicle autonomously, and a control subsystem (1b) for ensuring the safety of each autonomous vehicle (10),
- the autonomous subsystem comprising a perception module (50) connected to or comprising one or more sensors (C1, C2... Cn), a localization module (60), a planning module (70), a control module (80), and a server (30), said at least one autonomous vehicle being connected to the server (30) via a first communication network (40a),
- the control subsystem (1b) comprising a control center (20) connected to the server via a second communication network (40b), and a teleoperation module (90) enabling a human operator (21) to remotely take at least partial control of a vehicle (10),
the system (1) further comprising:
- a switch module (100) for activating or deactivating the teleoperation module (90), said switch module (100) being capable of being activated automatically or manually by the human operator so as to establish interaction between the teleoperation module (90) and the control module (80) or so as to isolate said teleoperation module (90) and control module,
**characterized in that** the system (1) further comprises:
- an activation layer (101) for the switch module (100), and
- a plurality of independent security layers (51, 61, 71) integrated into or connected to each of the perception (50), localization (60), and planning (70) modules, consisting of control programs for at least a portion of the processes carried out in the corresponding modules and/or for the quality of the first and second communication networks, one or more of the security layers being connected to said activation layer (101) of the switch module (100) and configured to switch the system to a dual or manual mode if faulty or non-compliant processes are detected in the perception (50), localization (60), or planning (70) modules, said security layers (51, 61, 71) being further adapted to monitor operations initiated by said human operator (21).

2. System according to claim 1, wherein the control center comprises at least one video data viewing device (41a, 41b), a telemetry data display device (42a, 42b), and one or more control devices adapted to activate one or more functions of an autonomous vehicle (10), such as steering wheel angle (F1), applying a driving speed (F2), applying a braking force (F3), activating turn signals (F5) or warning signals (F6) or lights (F7) or an audible warning signal (F8).

3. System according to any one of claims 1 and 2, in which said switch module (100) allows said human operator to control said one or more vehicles in dual mode so as to maintain assistance to the human operator by the autonomous subsystem (1a).

4. System according to any one of claims 1 to 3, in which one or several of the perception (50), localization (60), and planning (70) modules includes an artificial intelligence module, and in which none of the corresponding security layers (51, 61, 71) includes an artificial intelligence module.

5. System according to any one of claims 1 to 4, in which the security layers (51, 61, 71) are programmed to ensure a level of cybersecurity that complies with a current standard.

6. System according to any one of claims 1 to 5, in which the security layers (51, 71, 71), the teleoperation module (90), and the switch module (100) are implemented during the development of said at least one autonomous vehicle (10), or on pre-existing systems equipped with at least one perception module (50), localization module (60), planning module (70), control module (80), and server (30).

7. A method for managing at least one autonomous vehicle (10) using the system (1) as defined in any one of claims 1 to 6, the method comprising:
- a step of autonomously controlling each vehicle (10) using an autonomous subsystem (1a) of the system (1),
- a step of monitoring at least a portion of the processes involved in the autonomous operation of each vehicle (10), and
- a step of activating the teleoperation module (90) when a non-compliant or faulty process is detected.
**characterized in that** the step of monitoring at least a portion of the processes involved in the autonomous operation of each vehicle (10) is performed by means of several safety layers (51, 61, 71) associated with the perception modules (50), localization (60), and planning (70) modules within which the processes are carried out, and **in that** the method further comprises a step of verifying the instructions issued by an operator (21) when the teleoperation module (90) is activated, by means of said security layers (51, 61, 71).

8. Method according to claim 7, further comprising the step of verifying the compliance of the processes performed in one or several of said perception (50), localization (60), and planning (70) modules-either automatically or via instructions from an operator (21)-by means of said security layers (51, 61, 71).
